# EUROPEAN PATENT APPLICATION

(11) **EP 1 609 712 A1**
(43) Date of publication of application: **28.12.2005**
(21) Application number: 04718661.4
(22) Date of filing: 09.03.2004
(51) Int. Cl.: B62K 19/00, B62K 19/30, B62K 13/00, B60F 5/00

(54) **VERSATILE MOTOR VEHICLE CHASSIS**

(30) Priority: 13.03.2003 ES 200300599
(71) Applicant: Sanchez Belmonte, Salvador, 08591 Aiguafreda Barcelona (ES)
(72) Inventor: Sanchez Belmonte, Salvador, 08591 Aiguafreda Barcelona (ES)
(74) Representative: Isern-Jara, Nuria
(86) International application number: PCT/ES2004/000107
(87) International publication number: WO 2004/080788

(57) **Abstract**

The invention relates to a versatile motor vehicle chassis, and more specifically, a scooter chassis which enables a plurality of accessories to be connected thereto in a convenient and versatile manner in order to transform the structure of the vehicle for multiple different uses. The inventive chassis consists of a longitudinal bar comprising a tube for fixing the front stem of the handlebars and the steering device and a pivoted anchor element for connecting a rear structure. The chassis also comprises several supports and cable holders, supports for a high saddle, a footrest platform or body and other accessories.

## Description

### OBJECT OF THE INVENTION

The object of the present Invention Patent application is a versatile motor vehicle chassis that incorporates notable innovations and advantages when compared with the present frames and chassis currently available, especially for scooter and similar types of vehicles.

More specifically the new invention is made up of a chassis for a scooter that allows a plurality of accessories to be connected thereto in a convenient and versatile manner in order to transform the structure of the vehicle for multiple different uses. The chassis of the new invention is made up of a longitudinal bar comprising a tube for fixing the front stem of the handlebars and steering device and a pivoted anchor element for connecting the rear structure and a moveable support that has three support points for rear structures. The chassis also comprises supports for a high saddle, a footrest platform or body and other accessories.

### BACKGROUND TO THE INVENTION

At the present time, there are differing types of compact sized personal vehicles available. Standing out amongst them are the scooters made up of a flat platform, with a rear wheel and the front having the handlebars noticeably vertical or inclined and being able to turn, extending down to a lower wheel, which acts to provide the steering. These scooters are normally moved by human propulsion, as the user standing on the platform provides the movement by extending the other foot to the ground with a swinging movement.

One development of the stated scooter consists of motorising the known scooters, which are made up of a motor fitted onto the user support platform or similar structure and connected to the rear wheel by means of transmission, such as a belt or chain. These motorised scooters or motor scooters allow higher speeds to be reached, in addition to a noticeable increase in comfort for the user. However, said scooters are limited to being only as a means of transport due to their rigid structure.

### DESCRIPTION OF THE INVENTION

The versatile chassis for a motor vehicle object of this registration is characterised because it is made up of a structural element to make up an improved motor scooter and in addition allows for the quick and easy exchange of certain parts, thus the scooter being able to be converted into a vehicle suitable for travelling on snow, sailing on water, carrying out tasks in the garden such as ploughing and mowing the lawn and many others.

In effect, the chassis is made up of a longitudinal bar that has a pillar or tube at the front of the scooter and at the rear a series of couplings for the removable connection to the rear of the scooter. The connections at both ends of the bar are suitable for the quick exchange of multiple accessories that gives the scooter its versatility of uses.

In effect, provision is made so that the rear connection is made by means of an articulated connection and an anchorage or third and non-collinearly offset point. With this, a straight anchorage line is arranged onto which the connection is made. In this way, it is possible to fit a tilt mechanism, joined to articulated union so that it can turn and supported at the third point by means of a shock absorber or unit to take the strain. This connection at the third point enables the linking of, for example: suspension on the scooter.

Effectively the scooter in its arrangement as a moving vehicle has an engine at the rear made up of a tilting structure with the corresponding wheel and the engine/motor that moves it, in addition to the necessary accessories. This structure has a connection at the front that can be joined to the articulated connection of the chassis, allowing for oscillation in an upward or downward direction. In turn, there is a standard shock absorber element between the third point anchorage and a specific point on the tilting structure that absorbs the vibrations produced by the irregularities of the ground on which it travels. In the event of this shock absorption not being required, the third point is joined to the fitted structure by means of a rigid rod that does not produce any oscillation at all.

Said rear fitted structure can be made up of differing components, depending on the application to which the scooter is to be used. In this way instead of the structure only having one wheel it can have two parallel wheels connected to the engine/motor, a track chain connected to the engine/motor in order to be able to move the scooter over snow or something similar amongst others.

An example of the fitting is made up of two coaxially perforated lugs arranged on a transversal support at the rear of the frame. In turn, the rear tilting structure has a hollow tubular section with its length corresponding to the space present between the lugs, in such a way that they can be connected by a shaft passing through and which is bolted at both ends, with the corresponding washers. In a similar manner, the chassis can have a central tubular element and the structure fitted to the perforated fixing lugs.

The third fitting point of the structure attached to the rear section is arranged in a non-collinear position to the turning shaft articulation. This fixing point is by preference arranged in a higher or lower position than the articulation-turning shaft. The purpose of this is so that the support plane defined by both is noticeably vertical or inclined, favourable to a correct geometry for the tilting of the fitted structure.

As has been stated, the front part of the frame has the stated connection to a front steering element, such as, for example handlebars or something similar. Said handlebars have the stem inserted into the stated connection of tube where it can turn and is extended downwards into a suitable support and steering device. In effect, said connection is made up of a hollow cylindrical tube or pipe and at its upper and lower openings has an internal widening for the housing of the respective bearings or rollers that make the turning operation of the device easier.

In one embodiment of the steering device it can be made by two billets perpendicular to the connection tube, arranged respectively above and below and connected to the upward steering column. On both sides of the two billets, there are some longitudinal elements, which extend downwards to form the base of the steering mechanism. These longitudinal elements can have a wheel fixed at the end of the axel, some skates to slide on the snow or an elongated shaped float.

For example, a bridged support between the two billets can be fitted to the above steering mechanism. This support has two vertical openings at its front into which two parallel rods are inserted. These rods are connected at a lower bridge to where the two elements parallel to the longitudinal elements of the device come from. Each one of the rods has a set of two springs, a spring being arranged between the lower bridge and the support and the other spring between the bridge and a stop or upper nut. In this way, the front longitudinal elements are arranged to be floating in regard to the lower longitudinal elements, the lower ends being able to be attached by means of two articulated rods or something similar that establish an oscillating movement. The parts that make contact with the ground can be assembled onto the said rods, such as the wheel axle, some skis or any other.

If the frame needs to have the ability to go across fields or for 'cross' the longitudinal elements can be two long or short stroke shock absorbers fixed to the transversal billets. At the bottom end of both shock absorbers there is an axle fitted with a wheel or slide element. This front suspension in combination with an appreciably flexible rear suspension allows the frame to be used with motorised slides to be able to travel across lands with irregular surfaces.

An alternative embodiment of the steering mechanism has two sets of rods coming from the two billets fitted to the steering column, which have two longitudinal elements fitted, extending towards the lower part of the union with the support component, such as the already stated wheel or skis. Between the upper billet and a diagonally opposing bridge there is at least one shock absorber element or spring that absorbs the oscillating movement of the structure.

An accessory has been envisaged to be fitted onto the housing tube of the steering column or directly onto the steering structure, such as a ploughing mechanism, lawn mower, or other, for example by means of a clamp or something similar, or directly to the steering structure.

At the rear part the bar has a tube or coupling which is used for fixing a saddle column or seat. This collar arranged in a noticeably vertical manner has a reduced height, in such a way that if the user prefers to use the vehicle without a seat, the platform is completely free of obstacles. Therefore, the collar is offset towards the extreme rear of the bar. In one preferred arrangement the above-mentioned third point of anchorage of the rear connection can be arranged onto said tubular collar.

In addition, the bar has some supports for the fitting of the platform onto which the user gets on using the vehicle or scooter. In effect, both sides of the bar have been provisioned to have at least one or more transversal extensions onto which said platform can be fitted, being made up of one single surface or by two independent elements. Said surface is connected to the stated supports in a conventional manner, by bolts, rivets, welding or any other method.

As can be envisaged with a vehicle of this nature, along the frame of the scooter there can be different control cables and similar items arranged. These can be mechanical or electrical, such as the accelerator, the brake, lighting cable and others. In order to do this there are anchor points provisioned along the bar of the frame for said cables.

In one variation, these cables instead of being external can be threaded through the heart of the bar in order to protect them.

The bar can have several shapes and arrangements, however the preferred is straight, noticeably parallel to the horizontal and with an elbow at the front of the union with the steering column element. However, the possibility of said bar being made up of two or more tubular elements has not been dismissed.

In order for the scooter or vehicle to remain in the correct position when it is stationary or not in use a lateral foot has been provisioned, which is subject to having a suitable anchor point. This anchor point can come from the bar or, for example be adjacent to the rear support that makes up the articulation of the structure or the rear tilting assembly.

In order to complete the description that will be made below and for the purpose of giving a greater understanding of its characteristics, this present descriptive memorandum is accompanied by a set of drawings, which is illustrative but not limiting, where the most significant details of the invention can be seen.

### BRIEF DESCRIPTION OF THE DRAWINGS

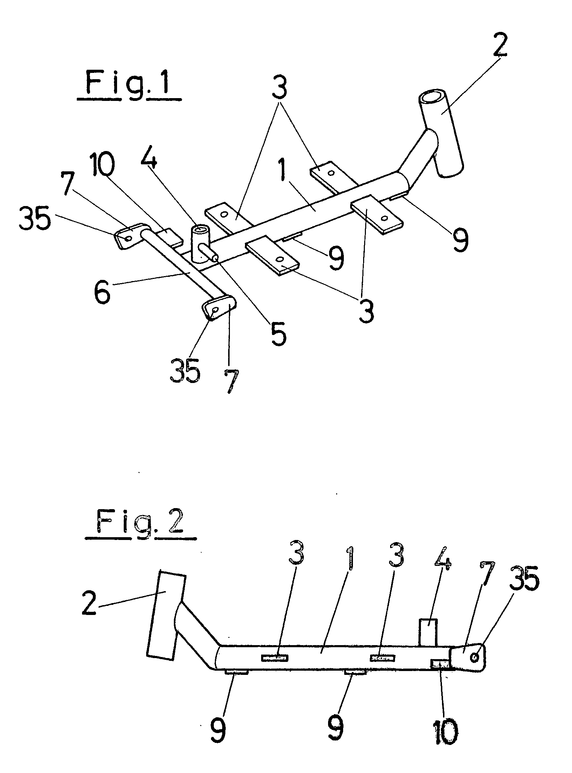

Figure 1. Shows a perspective view of the newly invented chassis.
Figure 2. Shows a profile view of the newly invented chassis.

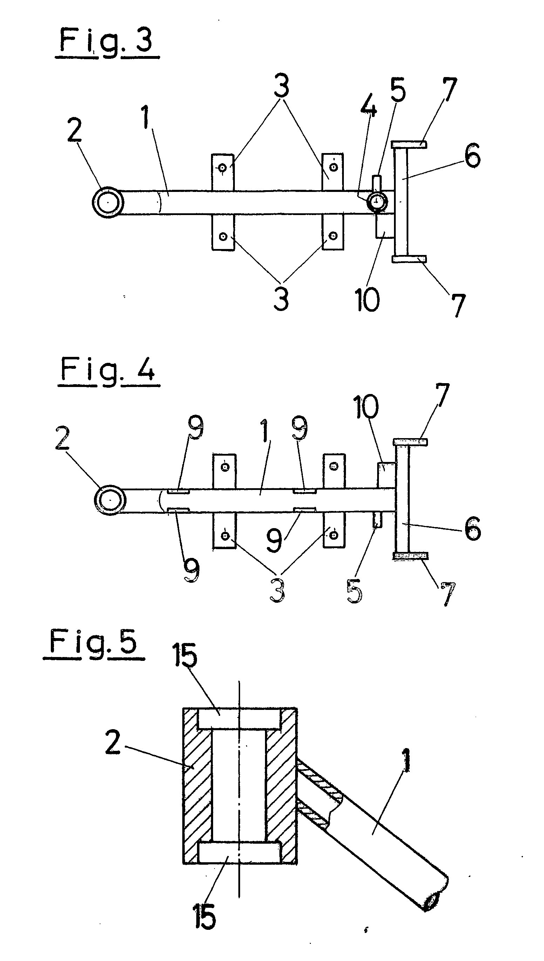

Figure 3. Shows a plan view of the newly invented chassis.
Figure 4. Shows an underside view of the newly invented chassis.
Figure 5. Shows a sectional view of the front connection tube.

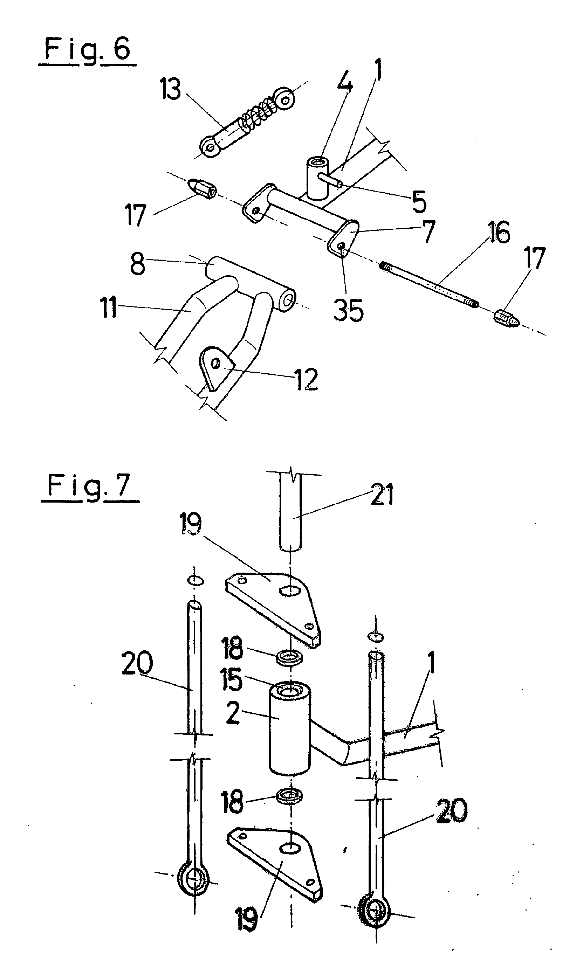

Figure 6. Shows a perspective view of the connection between the rear connection of the chassis and a rear support element.

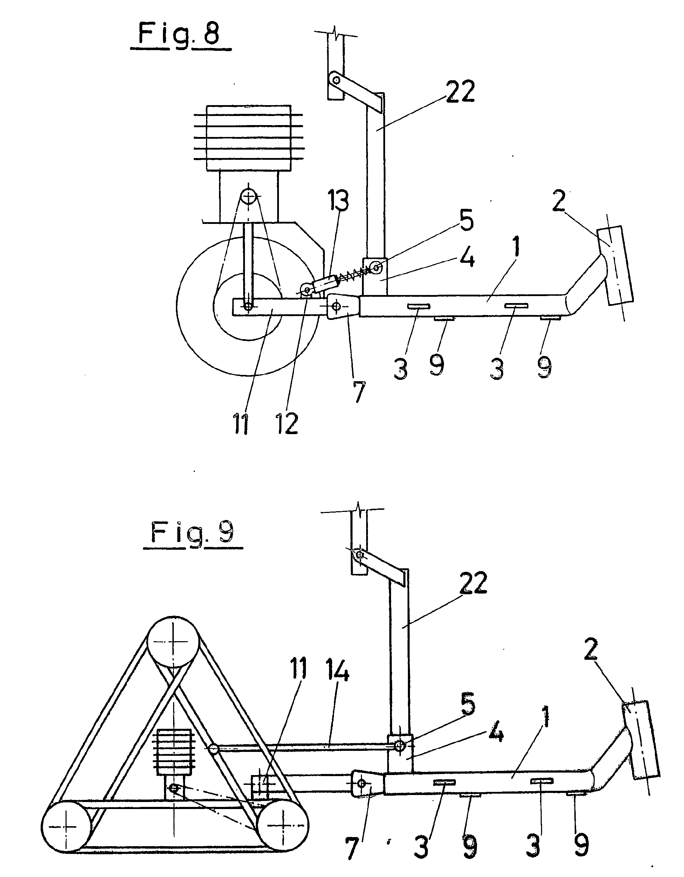

Figure 7. Shows a perspective view of the connection between the front connection tube and a front steering tube.
Figure 8. Shows a perspective view of the assembling of a rear tilting assembly system.
Figure 9. Shows a perspective view of the track assembly at the rear part of the frame.

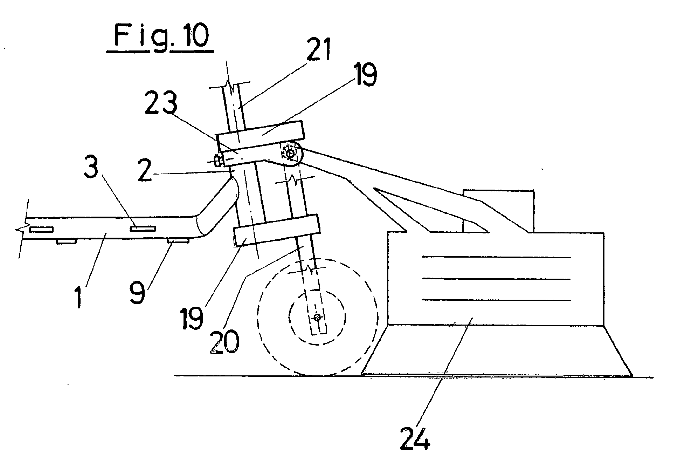

Figure 10. Shows a detailed view of the coupling of a front accessory to the steering support tube by means of a clamp.

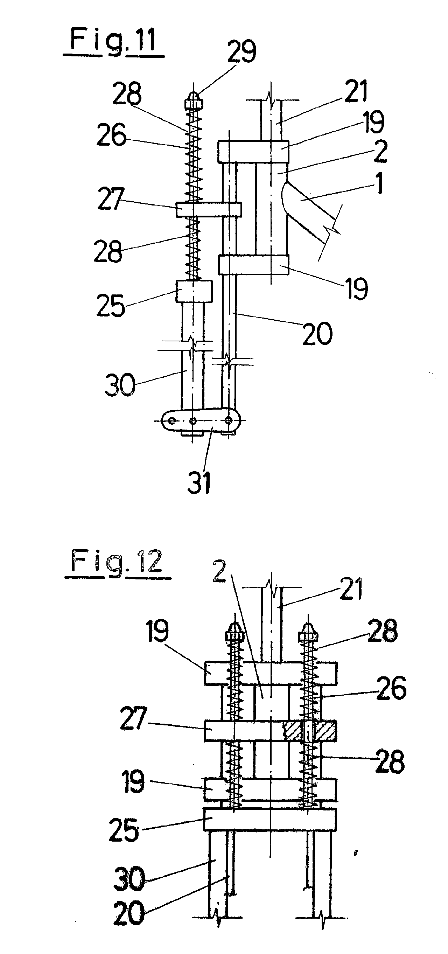

Figure 11. Shows a profile view of a coupling between the front connection tube and an alternative example of a front steering element with shock absorption by double springs.
Figure 12. Shows an elevated view of a coupling between the front connection tube and an alternative example of a front steering element with double action shock absorption.

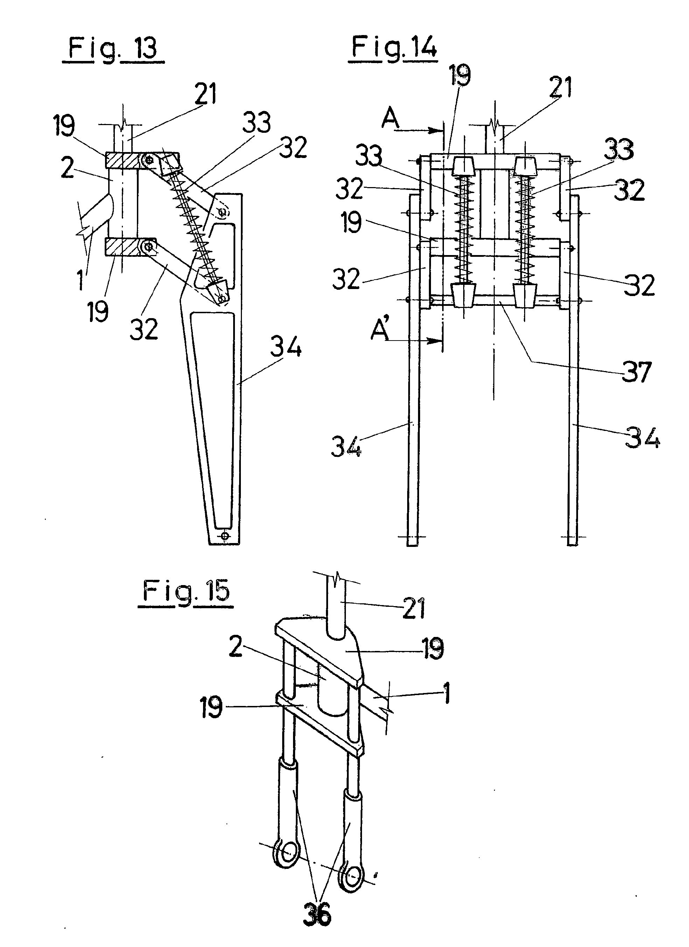

Figure 13. Shows a profile view of a coupling between the front connection tube and a second alternative example of a front steering element of front steering with shock absorption.
Figure 14. Shows an elevated view of the coupling of the previous figure.
Figure 15. Shows a perspective view of a coupling between the front connection tube and a third alternative example of a front steering element with shock absorption by gas or hydraulic cylinders.

### DESCRIPTION OF A PREFERRED EMBODIMENT

In view of the figures commented on, and in accordance with the numbering adopted, a preferred embodiment of the invention can be seen in same that is not by way of limitation on the invention. This invention consists of a frame that is made up by a tubular bar (1) that at the front part has an upwardly inclined elbow towards a tube (2) or pipe for the support of the steering device. Said bar (1) at the rear has a transversal support (6) from which there are two rear facing lugs (7), with respective openings (35) for the support of an attached structure (11). Between both openings (35) there is an anchorage structure (11) made from a hollow tubular body (8) in which a shaft (16) is housed, held in place by two bolts (17) or something similar on the external side of the lugs (7).

At the rear of the bar (1) there is a tube or coupling (4) for the support (22) of the seat/saddle arranged vertically upwards and to one side a bolt or fixing point (5). On both sides of the tubular bar (1) there are support brackets (3) for the footrests or support platform (not shown).

In turn, under the bar (1) there are support points (9) for the electrical and/or mechanical cables and towards the rear there is the support (10) for the fixing of a parking stand.

The rear structure (11) fixable to the stated support (6) by the lugs (7) and to the third point (5) is made from a tubular articulated body (8) and a bracket support (12) or anchoring bracket and an element connected to third point (5) with a bolt. Said connector element can be a shock absorber (13) or an element that yields or a rigid bar (14).

The tube (2) or pipe at the front end of the bar (1) is made up of an internal cylindrical housing tube of the steering handlebar bush (21). This internal pipe has, at both its top and bottom openings, housings (15) for the respective bearings (18) or rollers. Said bush (21) has by preference, two transversal billets (19), arranged at the top and bottom and which have longitudinal elements (20) at their respective ends for connecting to a wheel, a ski or some other support element.

In an alternative embodiment of the steering device with suspension, there is a support (27) between the two longitudinal elements (20) in which there are two vertical openings that house two parallel rods (26). Said rods (26) are joined at a lower transversal cross member (25), from which there are two parallel tubular elements (30) going to two lower articulated rods (31) connected to the rear longitudinal elements (20). Each one of these rods (26) has a set of springs (28) that is made up of a spring arranged between the support (27) and the lower cross member (25) and a second spring arranged between the support (27) and a bolt (29) or stop present at the upper end of the rod (26).

In a second alternative embodiment of the steering device, the device has two sets of articulated parallel connecting rods (32) at the ends of the transversal billets (19). The opposite ends of these rods (32) are connected to respective longitudinal elements (34) that extend to the lower support element. Between a cross member (19) and a bridge (37) there is a shock absorbing or similar element (33) between the articulations of the rods (32) in a diagonally opposing position.

In a third alternative embodiment of the steering device, the device has two shock absorbers (36) fitted to the two transversal cross members (19), in a parallel position and at the lower external part making a connection with the lower support element, wheel, scooter, float or something similar.

It has been provisioned that there is some form of alternative clamp (23) at the front tube (2) for the connection of a front attachable accessory (24), such a lawn mower, a plough or any other.

## Claims

1. VERSATILE MOTOR VEHICLE CHASSIS, being of the type where the construction corresponds to a scooter or similar with the possibility of interchanging components on the said chassis in order to make different uses and applications, such as a motor scooter with suspension, scooter with a caterpillar track drive and skis for travelling on snow, scooter with floats to travel along the surface of the water and others, said chassis having a longitudinal bar (1) and at the rear has a swivel anchorage with a third support point (5) and at the front handlebar tube (2), that is noticeably vertical or inclined, that is widened (15) at the upper and lower openings for the housing of the respective bearings (18), said tube (2) suitable to take a multiple steering device and/or for the attachment of accessories by means of a clamp (23) onto the said handlebar tube (2); the frame having at least one support (3) for the support of a single or double platform, footrests and/or something similar on both sides of the bar (1), joined by conventional linkage means, and being the steering mechanism fitted to the handlebar tube (21) made up from two transversal cross members (19) that have longitudinal and parallel tubular elements (20) at the respective ends.
**characterised** because it has several supports and cable holders (9) arranged onto the bar (1) and/or the supports (3), comprising on the inside thereof the control cables introduced or emerging through openings at the ends or suitable arranged in the middle.

2. VERSATILE MOTOR VEHICLE CHASSIS, in accordance with claim 1 is **characterised** because the rear swivel coupling is made up of a transversal support (6) fitted at the end of the bar (1), said support (6) having two lugs (7) with a co-lineal opening (35) and linkable to a tubular body (8) on the adjacent swivel structure (11). There is a shaft (16) passing through said lugs (7) and the tubular body (8), fixed in place with bolts (17), screws or something similar at the two ends; and because it comprises of an anchorage point (5) arranged offset and not co-lineal with the swivel shaft (16).

3. VERSATILE MOTOR VEHICLE CHASSIS, in accordance with claims 1 and 2 is **characterised** because in an alternative embodiment the rear swivel coupling is made up of a transversal tubular body (8) arranged at the rear end of the bar (1), this tubular body (8) is capable of being coupled to a support (6) on the adjacent swivel structure (11), arranged parallel and which has a co-lineal opening (35) on the two lugs (7) at the ends for connection to the above-mentioned tubular body (8). There is a shaft (16) passing through said lugs (7) and the tubular body (8), fixed by bolts (17), screws or something similar at the two ends.

4. VERSATILE MOTOR VEHICLE CHASSIS, in accordance with claims 1 and 2 is **characterised** because it is made up of an element connected between the anchor point (5) and the adjacent structure (11) that forms a support of the said structure (11) on the bar (1) of the frame; and because the connecting element is anchored to a support (12) on the adjacent structure, such as a bracket; and because the connecting element can be a shock absorber (13) or deformable element that makes a limited swivel of the structure (11) on the bar (1) of the frame in the form of suspension or something similar; and because the connecting element can be a bar (14) or rigid component, integrated or not into the structure (11), which makes a static connection with said structure (11) on the bar (1) of the frame.

5. VERSATILE MOTOR VEHICLE CHASSIS, in accordance with claim 1 is **characterised** because the bar (1) is made up from a detachable tube or coupling from the seat support (22) arranged at the top; and because said coupling (4) is offset to the rear of the bar (1).

6. VERSATILE MOTOR VEHICLE CHASSIS, in accordance with claims 1, 2 and 5 is **characterised** because the anchor point (5) is a bolt or something similar that is arranged on the support anchorage (22) tube or coupling (4).

7. VERSATILE MOTOR VEHICLE CHASSIS, in accordance with claim 1 is **characterised** because in an alternative embodiment the steering mechanism is made up of a support (27) between two longitudinal shafts (20) where there are one or more vertical through openings into which one or several parallel rods (26) are fitted. These rods (26) being joined at a lower transversal bridge (25) from which two parallel tubular elements (30) come as far as two articulated rods (31) connected to the rear longitudinal elements (20); and because each one of the rods (26) has a set of springs (28) that has a spring arranged between the support (27) and the lower bridge (25) and a second spring arranged between the support (27) and a bolt or stop (29) at the upper end of the rod (26).

8. VERSATILE MOTOR VEHICLE CHASSIS, in accordance with claim 1 is **characterised** because in an alternative embodiment the steering mechanism has two sets of articulated parallel rods (32) at the ends of the transversal cross members (19), the opposing ends of said rods (32) being connected to respective longitudinal elements (34) and extending to the lower support element; and because it has at least one shock absorber element (33), spring or similar arranged between a rod (19) and a cross member (37) between the articulation of the rods (32) in a diagonally opposing position.

9. VERSATILE MOTOR VEHICLE CHASSIS, in accordance with claim 1 is **characterised** because in an alternative embodiment the steering mechanism is made up of two shock absorbing elements (36) fixed to the two rods (19) in stead of the longitudinal tubular elements (20) for their assembly with a lower support device, such as a wheel, skis, a float or something similar.

10. VERSATILE MOTOR VEHICLE CHASSIS, in accordance with claim 1 is **characterised** because it has several supports and cable holders (9) arranged onto the bar (1) and/or the supports (3).

11. VERSATILE MOTOR VEHICLE CHASSIS, in accordance with claim 1 is **characterised** because the bar (1) and/or the supports (3) have the control cables on the inside and introduced or emerging through openings at the ends or suitable arranged in the middle.

12. VERSATILE MOTOR VEHICLE CHASSIS, in accordance with claim 1 is **characterised** because it has a support (10) for a side support foot.
